# EUROPEAN PATENT APPLICATION

(11) **EP 1 164 540 A1**
(43) Date of publication of application: **19.12.2001**
(21) Application number: 00927246.9
(22) Date of filing: 10.05.2000
(51) Int. Cl.: G06K 19/07, G07F 7/10

(54) **MULTIPLE DATA INTERCOMMUNICATION SYSTEM WITH INFORMATION CARRYING CARDS FITTED WITH A MICROPROCESSOR AND MEMORY OR THE LIKE AND SECURITY SYSTEM THEREOF**

(30) Priority: 12.05.1999 ES 9900996
(71) Applicant: LOUREIRO BENIMELI, Fermin, Jaime, 08034 Barcelona (ES)
(72) Inventor: LOUREIRO BENIMELI, Fermin, Jaime, 08034 Barcelona (ES)
(74) Representative: Urizar Anasagasti, José Antonio
(86) International application number: ES0000172
(87) International publication number: WO0072251

(57) **Abstract**

System for multiple communication of data from information holding cards provided with microprocessor and memory or similar and its security system comprising:
- an user interface (1) which has housing means (17) for one or several information and data carrying cards (2), a microprocessor (3) suitable for control, command and recording the operations carried out from said user interface (1), information storage means (4, 5), alphanumeric keyboard (6), visualisation screen (7) and one emitter - receiver (8), suitable to communicates with external devices that manage this operations, in form of a remote control device or integrated in a cellular phone terminal of GSM or different technologies.
- an external device (9) to manage the operations controlled by said user interface (1), which is provided with an emitter - receiver (10), suitable to establish communications with user interface (1), and a driving module (11) capable of controlling electromechanical and / or electronic devices (12) to execute the operations controlled from said user interface (1);
- contact pads (22; 31) and electric connection means (18) with the main bus (19), capable to communicate said contact means (22; 31) with the other elements of said user's interface (1);
- an information and data carrying external medium (34) intended to be placed or housed in a physical element such as a vehicle, valuable object, luggage or the like, for its control, location and identification, or placed in the label or seal of a commercial product, for its verification and authentication.
- a security system consistent in the installation of a security procedure based on a secret code or user identification number, associated to a data transmission and reception element, preferably a cellular telephone.

## Description

The object of the present invention refers, as its title indicates, to a system for multiple intercommunication of data from information carrying cards provided with microprocessor and memory or similar, of the type of those used to carry out bank, purchase - sale, identification operations and other services, as well as other domestic type operations, that presents some important advantages over means used at present with this purpose.

The present invention also refers to a security system for systems for multiple intercommunication of data from information carrying cards provided with microprocessor and memory or similar, consisting in the implementation of a procedure based on secure communications, by means of encryption methods, between said cards of information on permission to carry out operations.

Also, the present invention refers, as an integrating part of the security system, to an element provided with memory containing information and data to carry out banking, commercial and similar transactions, also provided with an own identification number corresponding to the entity, such memory being configured so that it will be only operative jointly with the element carrying the user code or identification number, that could be the subscriber identification module (SIM) in case of use of a mobile telephone, which allows the use of the terminal, or other similar.

Recently, a card with electronic chip has been developed incorporating in addition to all the elements of classic cards, microprocessor and memory inside the card itself, and that besides making it difficult to duplicate, it offers the possibility to carry out by itself tests, validations, encryption and storage of information. This electronic chip consists on a plate carrying information and data, being of reduced dimensions, approximately 0,5 cm x 0,5 cm, acting this way the card as physical support of the chip itself, in order to make it manageable by the user, being this card limited to incorporate some type of serigraphy, hologram or similar, or another type of graphic control as, for example, the user's signature or similar.

However, at the present time, although the card characteristics, such as size, dimensions and contacts of electronic chip incorporated therein etc., they have been standardised, each service requires to use a specifically designed card, what obliges to user to carry a great number of cards if he wants to make use of someone of the group of services offered at the present time, that includes from commercial and/or economic transactions to operations of telephony collection, public transport, etc. This problem becomes much more marked as long as each bank entity offers its own card dedicated to the use of its own services, being invalid or very expensive for its use in other bank entities.

Another problem being also presented consists in that has been extended the offer of replicas or imitations of products identified by marks, denoting distinctive quality characteristics in most of commercial environment sectors, or even worse the existence of fraudulent falsifications of bank notes, checks, policies and security documents, etc., presenting some differences with respect to the original product, not easily appreciable by the consumer. For this reason it becomes more and more necessary the use of authentication means of their products by the manufacturer, in order to the wholesaler, as well as the final consumer, have the certainty that they acquire an original product that offers the quality and/or guarantee corresponding to the mark that identifies it.

At the moment, the use of information and data carrying cards suffers an evident lack of security by the following reasons: a) it is often allowed to third people, such as salespersons, access to personal data of this information and data carrying cards; b) data of the card are often communicated by telephone, without even knowing the receiver identity of this data; c) in the event of misleading or robbery, it usually lapses an excessively long time until being able to connect with the issuing entity to communicate that event, what is also increased when the user detects the misleading or robbery of a group of cards, what implies to have multiple numbers of issuing entities at hand, apart from having to go with urgency to an police station with the consequent bothers.

On the other hand, it is universally recognised the importance that has acquired the information transmission by electronic means, especially from the extension of communications networks worldwide. This allows to carry out operations at distance that don't require a special security level, such as access to public databases, and others that require a higher security level, like consultations of medical, banking, fiscal data, etc. that require the application of secure communication protocols. But it also exists a group of operations that involve an action, as presentation of fiscal declarations, money transfers, etc. that requires verification of conformity from who orders them to produce legal effects. These require, besides a high security level in transmissions, sending an electronic signature that already grant certain authorised entities.

In order to integrate a group of information carrying cards, provided with microprocessor and memory or similar, in an only system or device and to provide it with a security system, that gives solution to the previous problems, it has been developed the system of multiple intercommunication of data between information carrying cards provided with microprocessor and memory or similar and their security system, object of the present invention, that facilitates and makes securer the use of services offered by these cards, that consists of:
- an user interface preferably consisting in either a remote control device, or integrated in a cellular phone terminal GSM, or of other technologies, having means of housing one or several plates carrying information and data of these cards, a printed, flexible or other type circuit, suitable to make contact with these plates in order to read the information contained in this plates, a suitable microprocessor for control, command and 'registration of operations carried out from this user interface, means of information storage such as, preferably, a first read-write memory suitable for data recording and reading, and a second read only memory, preferably a non volatile memory, an alphanumeric keyboard suitable to allow access to the information as well as for management of this plates, a visualisation screen adequate for presenting the information related to the operations being carried out, and an emitter-receiver device by means of infrared rays, via radio, ultrasounds or any other appropriate technique, suitable to establish communications with external devices that manage this operations, keeping in mind that in the event of being integrated in a phone terminal, it would not be necessary to duplicate these elements, but rather their use would be shared between terminal and interface according to its use in each moment.
- An external device for managing the operations commanded from this user interface, that has an emitter-receiver device, suitable of establishing communications with user interface, and a driving module suitable to command electromechanical and/or electronic devices to execute the operations commanded from this user interface.
- Contact means (22; 31), such as a printed, flexible or another type circuit suitable to make contact with this plates, as well as electric connection means (18) with main bus (19), adequate to communicate this contact means (22; 31) with the other elements of this user interface (1), being able to incorporate this coupling means in the user interface itself (1) or to be constituted by means of an external reader means (24) appropriate to communicate with this user interface (1) through a communication port (23) arranged to this aim.
- A reading system, via radio, of the information contained in microcircuits without their own supply, feeding from the emitted energy by the user interface, in enough quantity to transmit during a short interval of time the recorded information in the microcircuit itself.
- An external support of information and data (34), provided of a microchip (35), and (36) readable by user interface, being said external support of information and data (34), suitable to be placed or housed in a physical element, such as a vehicle, valuable object, luggage or similar, for their control, localisation and identification, or placed in the label or seal of a commercial product, for their testing and authentication, readable by means of electric contact (35) or via radio (36).
- A security system for a system for multiple intercommunication of data from information carrying cards, provided with microprocessor and memory or similar, consisting in the application of a code number associated to the user and unique for all elements provided with memory carrying information, housed in user interface.
- Optionally, the user interface will be equipped, either in its embodiment as autonomous device, or, more preferably, integrated in a cellular phone terminal, with specific circuits for encryption/decryption, if it is required by the information transmission speed, or to integrate the encryption/decryption function in the microprocessor and memory of the user interface itself, that by means of algorithms standard in these techniques and keeping in mind the security level wanted for the longitude of keys, they can cipher and decipher information for its security in the transmission.
- Also optionally, electronic signature can be integrated in user interface, either supported by a card provided with microprocessor and memory that would be housed like any other in the interface, or kept in the non volatile memory of the interface itself, being able to endow to the microprocessor of the interface of means so it can erase said memory in the event of fraudulent openings of the box of the mentioned interface, to avoid their reading by unauthorised people.

Concretely, user interface has a box manufactured with a resistant, preferably slight material, such as plastic or any other one similar, of appropriate dimensions to be carried in a pocket, handbag or similar, and having opening means to house one or several information carrying circuits supported on cards provided with microprocessor and memory or similar, constituted preferably by a folding cover located at its rear part, with fastening means that, in the closed position of this opening means, allow the secure fixation, preferably by pressure, of this circuits. In this way, localisation, distribution and reinstallation or substitution of this circuits can be carried out in a easy way by user, thus allowing to the user access to the group of information and data carrying plates by opening this means.

This housing means of plates carrying information and data consist, preferably, of a group of compartments with electric connection means to said printed, flexible or of another type circuit adequate to make contact with this plates in order to reading the information contained in said plates. Connection, reading of information and communication with the group of information and data carrying plates are carried out from a microprocessor equipped in user interface through this printed, flexible or of another type circuit. This microprocessor carries out also the control operations, command and recording of operations carried out from said user interface.

Said microprocessor provided in user interface can, optionally, recognise each one of the information and data carrying plates located in the housing means for said plates automatically, as well as to identify the position of each one of this plates, carrying out a recognition poll. It allows to the user to stop worrying about the specific housing position of each one of the information and data carrying plates, as long as it is the own user interface, by their microprocessor, the one that polls and identifies each one of the plates placed inside the user interface.

The microprocessor operations are complemented with a first read-write memory, appropriate for data recording and reading, and a second read only memory, preferably a non-volatile memory, provided in user interface. In this read only memory are stored each one of the communication protocols corresponding to each one of the information and data carrying plates housed in the corresponding connecting means of user interface. Also, said memory can contain several protocols dedicated to the communication with other plates not provided by the moment in user interface, either because user doesn't have the corresponding plate, or because he doesn't wish to use said services, etc., but them being foreseen for their future use, as well as for a not individualised standard production.

This way, said microprocessor and memories contained in said user interface, are dedicated to carry out the management, classification, identification and storage functions of information, relative to operations carried out, according to the established criteria settled down in the microprocessor programming. Also, said user interface has configuration and reconfiguration means of the user interface itself, as well as for adaptation, substitution, replacement or elimination of said plates carrying information and data.

The group of electronic elements of the user interface of system for multiple data intercommunication from cards carrying information is fed, preferably by a power supply consisting preferably in a group of rechargeable batteries. Also, an internal security system supply can be provided in order to avoid data losses, user interface configuration errors, etc. because of exhaustion of system main supply.

Optionally, the user interface electronic elements could be integrated in a single printed, flexible or of another class circuit, configurable, suitable to integrate likewise in said circuit the realisations of said information and data carrying cards.

User interface has also media communication with the user, consistent, preferably, in an input device, preferably in an alphanumeric keyboard provided in the front face of user interface, adequate to allow access to the information as well as for management of said plates, and in an output device, preferably, a visual screen, adequate for presentation the information relative to operations that are being carried out This way, the user directs and controls the operations to be carried out by means of the system for multiple intercommunication of data and information carrying cards provided with microprocessor and memory or similar, object of the present invention, by means of the use of the alphanumeric keyboard that allows selection of a certain service by means of selection of the corresponding plate, control access to said service by means introducing his personal key or the identification corresponding code, and other checking or control operations, such as information about later carried out operations, balances in credit accounts, electronic money or similar, as well as access to databases of different contents (phone list, electronic agenda, etc.). Also, both the state and result of the carried out operations or that will be carry out, and required information, or, in general, information relative to the operations that are carried out through the alphanumeric keyboard, can be visualised, for example in the visual screen that could be, a multiple lines liquid glass screen.

In the preferred embodiment of the user interface integrated in a cellular phone terminal, all the mentioned elements (microprocessor, memories, keyboard, screen etc.), will be those of the telephone itself, so that their use would be shared between terminal and interface according to the use that is made in each moment of it.

This way, said permanent storage means of user interface have addressable storage space for location of personal databases, adequate to store data relative to the system itself, to the user or another data type wanted to be integrated in said database.

Also, said user interface comprises protection means consisting in, preferably, permanent storage means, such as, preferably, a non volatile memory, for registration and storage of personal access keys suitable to restrict the user interface utilisation at different levels, such as, preferably, global access, restricted access, or operation restricted to one user. This way, a group of security measures is established enabling a user the realisation of corresponding operations, that restricts the use of said interface at different levels, so avoiding unauthorised use by third people, because of loss or theft of user interface. Alternatively, said personal keys and their security and control associated procedures can be incorporated in one of the information carrying cards housed in the device, so they can be exchanged between different systems for multiple data intercommunication from information carrying cards, allowing the user to change said device when it is wished for reasons of obsolescence, failure, etc.

Included in this group of security and access restriction measures, it can be provided, optionally, an individual and exclusive identification number of the user interface, reason why this has means of storage of said individual identification number or key. Alternatively, the individual and exclusive identification number could be stored in one of the information carrying cards housed in user interface.

Now then, when the security system of the invention is applied to user interface integrated in a cellular phone terminal, it is based on the following novel development: Each element provided memory carrying information or similar, dedicated to the realisation of bank, commercial or similar transactions, it is usually issued by the corresponding issuing entity. When its use is required, the element provided of memory carrying information or similar will establish a secure exchange of information with the module of user identification (SIM) of the telephone, in that way it wilt determine in a reliable form that is active. To be able to establish this secure information exchange, the user will provide to issuing of card entity and to the phone network operator, which has emitted the user identification module (SIM), the necessary data, codes and keys. These data, codes or keys would have been provided to the user previously by one part: the issuing entity or the operator, which has emitted the SIM. These data will be incorporated either during the SIM issue or of the element provided with memory carrying information or similar, or them will be incorporated after the issue by the user itself or by some of the other parts.

When it has been verified that the user identification module (SIM) it is present and active, the element provided of memory carrying information or similar may require the introduction of a specific code or personal identification number (PIN).

This way, in case of misleading or robbery of the whole system associated to the user cellular telephone, the sequence of events will be the following one:
a) if the telephone is off it won't be possible the access to the system by any person that is not the authorised user.
b) in case the telephone is on, the person intending to carry out some bank or commercial transaction won't be able to get access to the elements provided of memory with information, housed in the system for multiple intercommunication, because he ignores the personal identification number corresponding to said element, or for not having the corresponding fingerprint, thus being not possible to use none of the mentioned elements to carry out any bank, commercial or similar transaction.
c) the user affected by misleading or robbery of the whole system, will only should, with effects of information, to request to the mobile telephony company the annulment of the corresponding user identification module (SIM), avoiding to have to carry out so many communications as number of issuing entities of chips-microprocessors carrying information and data, contains the system for multiple intercommunication and avoiding to have to leave other activities to present the corresponding formal complaint, since he will have the security of being protected by the security system object of the present invention.

The element provided of memory carrying information issued by a public or private entity, usually a financial or commercial entity, presents such configuration that access to certain data of the same one, can only be established through the element provided of memory carrying information, associated to the characteristic code or identification number of the user, that can be the user identification module in the case of use of a mobile telephone (SIM), that allows the use of the terminal, or other similar, therefore preventing the access to unauthorised people. In a preferred embodiment this memory provided element carrying information will be housed inside the user mobile telephone and the configuration of this memory will only allow access through the microprocessor of said user mobile telephone and also establishing an access code coincident with the personal identification number (PIN) of the user mobile telephone. In this case, the microprocessor of user interface is a mere intermediary in transferring information that occurs between both elements provided each with microprocessors, because this information is transferred encrypted by means of algorithms, keys and data only known by microprocessors of the cards, and not by that of the interface.

The security and access control measures are supplemented efficiently with a group of means of detection of error states, alarm or similar, suitable to detect anomalous situations due to incorrect, inadequate, not authorised use or similar, as well as blocking means of one, several or all the operations manageable from the user interface as a result of activation of said means of detection of error states, alarms or similar.

Also, the system for multiple intercommunication of data from information carrying cards provided with microprocessor and memory or similar, has an external device for managing the commanded operations from said user interface, in order to, on one hand, to communicate bidirectionally with said user interface, and, for other, to drive electromechanical and/or electronic elements of the device offering the corresponding service, such as cash dispenser, system for telephony collection, public cancelling system, or similar, that at the present time are provided of an appropriate card controller. This way, this external device for managing the commanded operations from said user interface acts as interface between the device offering the service to the user and user interface, from where the appropriate orders are generated for carrying out the corresponding operations.

In order to allowing the establishment of a bi-directional communication between user interface and said external device for managing the operations commanded from this said user interface, both elements of the system for multiple intercommunication of data from cards carrying information, provided with microprocessor and memory or similar, object of the present invention, they have an emitter-receiver device, suitable to communicate information between both devices, such as, among other, sending and reception of data, emission and reception of control , test and supervision commands etc.

The emitter-receiver device provided in user interface as well as in said external device, for managing commanded operations from said user interface, may be an emitter-receiver device by infrared rays, radio frequency, ultrasounds, or any other appropriate technique.

From the communication between user interface and external device to manage the operations commanded from said user interface, which, as a result of the orders received from said user interface, drives electromechanical and/or electronic elements of the device offering the corresponding service, such as cash dispenser, system for telephony collection, public cancelling system, or similar, it allows to deduce the compatibility between systems used at the present time and the system object of the present invention, because of the possibility to coexist in one single device offering a service, the existent controller of cards nowadays, and the external device object of the present invention.

This way, the system for multiple intercommunication of data from information carrying cards provided with microprocessor and memory or similar, it is adapted to obtain general, bank or similar, information, relative to movements of accounts, balances and any other operation, as well as other available information in databases of operative centres, as well as for carrying out the payment and the reception of securities by anyone of available systems for making said operations.

Finally, the system for multiple intercommunication of data form information carrying cards provided with microprocessor and memory or similar, object of the present invention, is provided with a group of elements suitable to communicate with other external devices. This way, the emitter-receiver device equipped in user interface enables the communication between it and a group of devices or information stations of prepared with this aim, equipped for its communication with the user interface itself.

Furthermore, the system for multiple intercommunication of data form information carrying cards provided with microprocessor and memory or similar, object of the present invention, it is adapted for remote communication with external devices. This way, user interface, when it is a remote control device, may be optionally provided with a modem connection interface, suitable to allow the remote connection and communication between said user interface and a computer, thus allowing bidirectional data transfer between both devices, making possible to the user the control and supervision of the group of operations carried out, or to store them in a database, the computer managing of user interface, as well as configuration, test or similar operations of the user interface itself by means of the use of appropriate tools installed in the computer. This way, the user interface itself allows him to transfer data from this to a computer, which, with analysis and administration of databases available tools in the market, could, in a comfortable, quick and simple way, to analyse the group of carried out operations.

Being user interface integrated in a cellular phone terminal is unnecessary a modem connection, because the terminal itself, provided with means for its direct connection to a computer by cable, infrared rays or any other system, it is able to send and receive data using cellular networks, since these telephones communicate by means of digital techniques. Neither it is necessary the use of a computer in this case, since terminal can be provided with access capacity to networks for consultations of databases, configuration, test, carry out of bank operations etc., by means of terminal specific protocols, such as the Wireless Application Protocol, better known by its acronym WAP, or any other one that allows data transmission through cellular telephone networks that could exist in the future.

The connection means to a modem and a computer described above, also allow to use the system for multiple intercommunication of data from information carrying cards provided with microprocessor and memory or similar, object of the present invention, to carry out sale and purchase operations, access to databases, etc. through a computer and networks, with local or world-wide extension, such as, preferably, Internet. Access to this type of local or world-wide networks allows the user access to both the information available in them and the use of services by them offered, using as payment means the user interface itself.

Furthermore, the user interface of the system for multiple intercommunication of data from information carrying cards provided with microprocessor and memory or similar, object of the present invention, has a connection interface to an external reader, suitable to allow bi-directional communication between both of them, as well as access from said reader both to the information contained in said information and data carrying plates and in said internal storage means of the user interface itself. Test, verification and/or configuration operations can be carried out from said external reader over the user interface itself. This connection interface could be physically the same connection interface with modem described previously, although a corresponding controller will be used in each case.

Also the system for multiple intercommunication of data from information and data carrying cards, object of the present invention, can be provided with a device for identification, control, localisation and authentication of physical elements, such as vehicles, valuable objects, luggage and similar. Such device is constituted by said reader of information and data arranged in user interface and of one or several external plates carrying information and data housing microchips containing a predetermined information. Transmission of the information contained in said microchip to the means reader of information and data arranged in the user interface of the system, object of the present invention, will be able to be carried out between them with physical contact or without physical contact. To this aim, the reader means has coupling means to plates carrying information and data, activation/deactivation reading means, control, command and synchronisation means of communications with user interface by mean of the corresponding communication protocol, as well as communication means with said user interface.

Communication between user interface and reader means can be established by any means of conventional transmission, as cable transmission, radio transmission or optic transmission. Correspondingly, the communication port of user interface will have appropriate receiver/emitter means.

Optionally, the reader means can have additionally its own temporary storage means as well as means of data validation.

User interface can also be equipped with a transmitter - receiver suitable for reading information recorded in identification chips that are stimulated when they receive a radio signal in a certain band, emitting in turn the information recorded in them.

Advantageously, said extemal support, carrying information and data, has incorporated a microchip of the type of those used in smart cards. In what is referred to dimensions of physical support, instead of being a plastic card, it will be placed in a different support as, for example, a band of flexible material or any rigid material that makes functions of label or of identification, control, authentication or localisation element.

With respect to microchip, it is a microprocessor with asynchronous or of another type communication, that will incorporate hardware and software security measures, so it becomes in an unique and non duplicable piece, so avoiding that can be copied. The operating system or the chip mask supports a system that can make that the communication with the device of reading of the same one is completely secure and therefore it not only avoids fraud in the label (chip), but rather it also avoids it in the reader.

The reader means must be a device specially developed for this application, firstly to avoid that could be easy to obtain by them attempting the fraud. Secondly, it must be an especially secured device for these chips at electronic level. The reader means must be so designed that it can carry out its function by physical contact or without physical contact with the external support of information and data fixed to a physical element such as a label, seal or similar. Also, it should be economically viable to facilitate their wide distribution.

So, the following applications are offered to consumers and manufacturers :
a) authentication means of products, making this way difficult the realisation of replicas or imitations of products identified by a mark as a hallmark of quality, as long as the technology developed at the moment in relation to electronic chip incorporated at present in credit cards, allows the use of a microprocessor and memory inside the electronic chip itself, that, besides hindering its copy, it offers the possibility of carrying out by itself tests, validations, ciphering of information and storage of information. This way, besides offering the described authentication means, it offers possibility to include additional information relative to product like, for example, size, composition, price, origin place, etc. that user can easily visualise in the visualisation screen incorporated to user interface;
b) identification and localisation means of such physical elements as vehicles, valuable objects , luggage and similar;
c) means of verification of authenticity of bank notes, cheques and any other bank document.
d) identification and verification means of security documents, certificates, national identity cards, passports, titles, guarantees, etc.

To understand the object of the present invention better, a preferred practical embodiment of the system for multiple intercommunication of data from information carrying cards provided with microprocessor and memory or similar is hereinafter described based on the enclosed figures, where it is shown:
Figure 1 shows schematically a block diagram of the system for multiple intercommunication of data from information carrying cards, object of the present invention.
Figures 2a and 2b show, respectively, a front view and a side view of user interface, in its as remote control device, that is part of the system for multiple intercommunication of data from information carrying cards, object of the present invention.
Figures 2c and 2d show, respectively, a front view and a side view of user interface, in its configuration as cellular phone terminal, that is part of the system for multiple intercommunication of data from information carrying cards, object of the present invention.
Figures 3a and 3b show, respectively, the housing means of information and data carrying plates as well as connection means of those with circuitry of user interface, and an inside view of this user interface after the corresponding plates has been located.
Figure 4 shows schematically a block diagram of an alternative embodiment of the system for multiple intercommunication of data from information carrying cards, object of the present invention, incorporating coupling means to establish communication with an external device.
Figure 5 shows a front view of user interface, in its control configuration as remote control device that is part of the embodiment of the system shown in Figure 4.
Figure 6 shows schematically a block diagram of an alternative embodiment of the system for multiple intercommunication of data from information carrying cards, object of the present invention.
Figure 7 shows a front view of user interface, in its control configuration as remote control device that is part of the practical embodiment of the system for multiple intercommunication of data from information carrying cards shown in Figure 6.
Figure 8 shows the external support of information and data in which is housed a microchip, with label form to go fixed to a commercial product whose authenticity wants to check and that contains some predetermined data
Figure 9 illustrates a flow diagram showing the operative sequence of the security system of the invention applied to a system for multiple intercommunication of data in case of the preferred embodiment with a cellular phone terminal, by an user knowing the personal identification number (PIN) for access to the operating system of this mobile telephone.
Figure 10 illustrates a flow diagram showing the operative sequence of the security system of the invention, applied to a system for multiple intercommunication of data, in case of a preferred embodiment with a cellular phone terminal, handed by a not authorised person not knowing the personal identification number (PIN) for access to the operating system of said mobile telephone.
Figure 11 illustrates a flow diagram showing the operative sequence of the security system of the invention, applied to a system for multiple intercommunication of data, in case of a preferred embodiment with a cellular phone terminal, in which identification for access to the operating system is made by means of recognition of user fingerprint, in case user interface is equipped this feature.

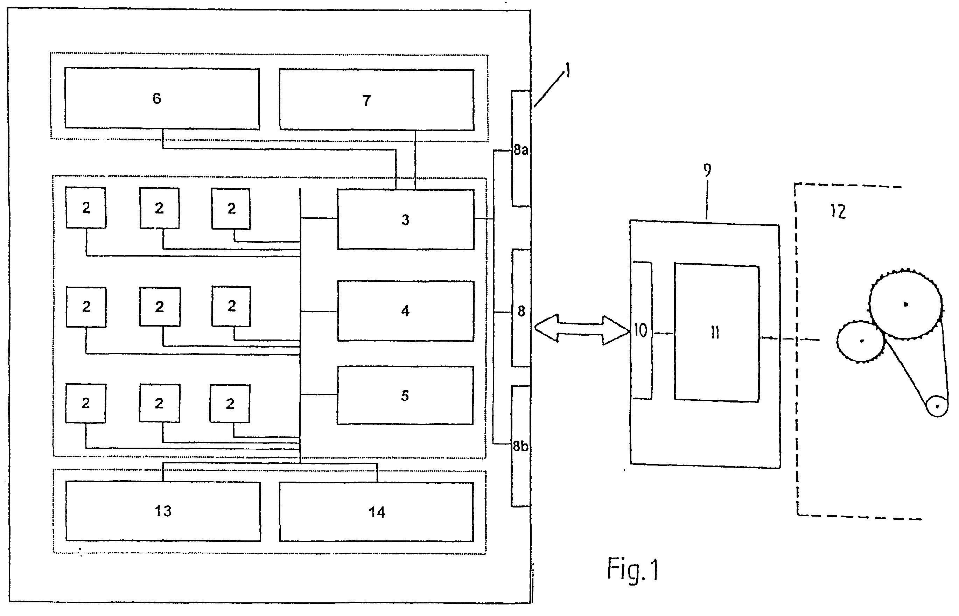

Such as it is represented in Figure 1, the system for multiple intercommunication of data between information carrying cards provided with microprocessor and memory or similar, that consists of:
- User interface (1), consistent preferably in a remote control device or integrated in a cellular phone terminal GSM or of other technologies having means of housing one or several plates (2) carrying information and data of these cards, a printed, flexible or other type circuit, suitable to make contact with the said plates, shown in Figure as a group of electric connections, in order to reading the information contained in said plates, a microprocessor (3) suitable for control, command and registration of operations carried out from said user interface (1), means of information storage (4, 5) such as, preferably, a first read-write memory (4), suitable for recording and reading data, and a second read only memory (5), preferably a non volatile memory, an alphanumeric keyboard (6) suitable to allow access to the information as well as for management of said plates (2), a visualisation screen (7) adequate for presenting information related to the operations being carried out, and an emitter-receiver device (8), preferably by infrared rays , radio frequency signal, ultrasounds, or any other appropriate technique, suitable to establish communications with external devices that manage said operations, keeping in mind that in the event of being integrated in a phone terminal, it would not be necessary to duplicate these elements, but rather their use would be shared between terminal and interface according to its use in each moment.
- User interface can also be equipped with a transmitter-receiver (8a), suitable for reading the information recorded in identification chips, that are stimulated when they receive a radio signal in a certain band, emitting in turn the information in them recorded.
- Optionally, user interface will be able to equip, either in its embodiment as remote control device or more preferably integrated in a cellular phone terminal, of encryption/decryption specific circuits (8b), if it is required by the transmission speed of information, or to integrate the encryption/decryption function in the microprocessor and memory of the user interface itself, that by means of algorithms, standard in these techniques, and keeping in mind the security level wanted for the keys longitude, they can cipher and decipher information for its secure transmission.
- An external device (9) for managing the operations commanded from (10), suitable to establish communications with user interface (1), and a driving module (11) suitable to command electromechanical and/or electronic devices (12) to execute operations commanded from said user interface (1).
- Contact means (22, 31) such as a printed, flexible or another type circuit suitable to make contact with the said plates, as well as electric connection means (18) with main bus (19), adequate to communicate this contact means (22; 31) with the other elements of this user interface (1), being able to incorporate this coupling means in the user interface itself (1) or to be constituted by means of an external reader means (24) appropriate to communicate with this user interface (1) through a communication port (23) arranged to this aim.

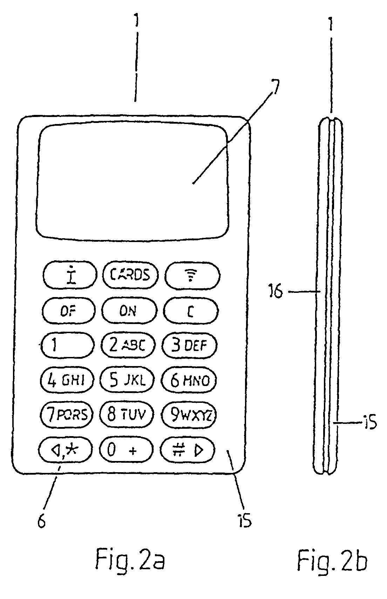

Concretely, as it is represented in Figures 2a and 2b, user interface (1) has a box (15) manufactured with a resistant, preferably slight material, such as plastic or any other one similar, of appropriate dimensions to be carried in a pocket, handbag or similar, being the preferred dimensions of said user interface (1) next to the dimensions represented in real scale in Figures 2a and 2b. Furthermore, it has opening means to house one or several information and data carrying plates of cards provided with microprocessor and memory or similar, constituted preferably by a folding cover (16) located at its rear part, with fastening means that, in the closed position of this opening means, allow the secure fixation, preferably by pressure, of said plates (2). This way localisation, distribution and reinstallation or substitution of said plates (2) can be carried out in a easy way by user, thus allowing to user access to the group of plates (2) carrying information and data by simply opening said means.

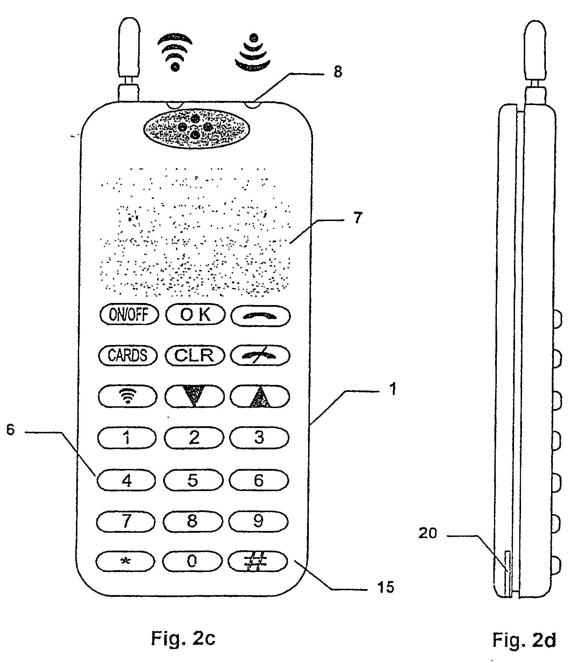

In the case of Figures 2c and 2d, in which user interface (1), is represented integrated in a cellular phone terminal, this will include a circuit that houses information and data carrying plates provided with microprocessor and memory or similar, a folding cover in its rear part and the other elements detailed in previous paragraph, that is keyboard (6), visualisation screen (7) and infrared rays interface (8). In the side view can be appreciated, at its bottom part, a groove (20), provided for reading chips embedded in identification and control labels of products.

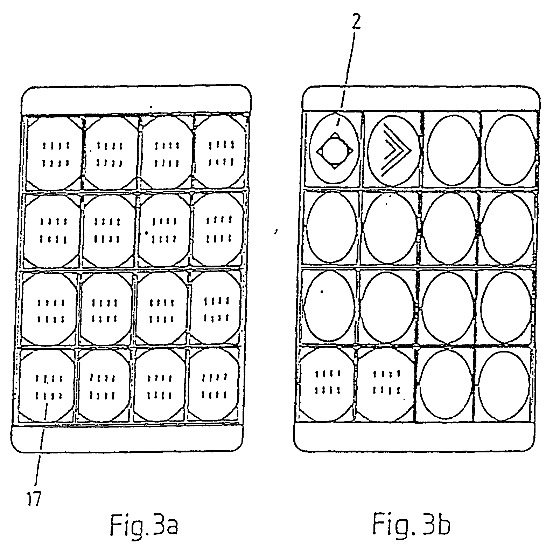

Figure 3a shows said means of housing plates (2) carrying information and data, that consist preferably on a group of compartments (17) with electric connection means to said printed, flexible or of another type circuit suitable to make contact with said plates (2) in order to reading the information contained in said plates (2). In the present practical embodiment, sixteen suitable compartments are shown to house so many plates. However, it is evident that you can design a user interface with a different number of compartments. Connection, reading of information and communication with the group of plates (2) carrying information and data is carried out from a microprocessor (3) provided in user interface (1) through said printed, flexible or of another type circuit. Said microprocessor (3) also carries out control, command and record operations, of actions carried out from this user interface (1).

Figure 3b represents user interface (1) with corresponding plates (2) housed in compartments (17) shown in Figure 3a.

The microprocessor (3) provided in user interface (1) can, optionally, recognise each one of information and data carrying plates (2) automatically, located in the housing means for said plates, as well as to identify the position of each one of said plates (2), carrying out a recognition poll.

Operations of microprocessor (3) are complemented with a first read-write memory (4), suitable for data recording and reading, and a second read only memory (5), preferably a non volatile memory, provided in user interface (1). In said read only memory (5) are stored each one of the communication protocols corresponding to each one of the information and data carrying plates (2) housed in the corresponding connecting means of user interface. Also, said memory (5) can contain several protocols dedicated to the communication with other plates not provided by the moment in user's interface (1), either because user doesn't have the corresponding specific plate (2) or because he doesn't wish to use said services, etc., but being foreseen for their future use as well as for a not individualised standard production.

The group of electronic elements of the user interface of system for multiple data intercommunication from cards carrying information is fed by a power supply, not shown in Figures, consisting, preferably, in a group of rechargeable batteries. Also, an internal security system supply can be provided in order to avoid data losses, user interface (1) configuration errors, etc. because of exhaustion of system main supply.

User interface has also communication means with the user, consistent, preferably, in an input device, preferably in an alphanumeric keyboard (6), provided in the front face of user interface, adequate to allow access to the information as well as for management of said plates, and in an output device, preferably, a visual screen (7), adequate for presentation the information relative to operations that are being carried out Figures 2a and 2c show an example of embodiment of an alphanumeric keyboard with on and off keys, information key, card selection key, cancelling key, emission key and alphanumeric keyboard for user interface (1) use. This way, user directs and controls operations to be carried out by means of the system for multiple intercommunication of data and information carrying cards provided with microprocessor and memory or similar, object of the present invention, by means of the use of the alphanumeric keyboard (6) that allows selection of a certain service by means of selection of the corresponding plate (2), control access to said service by means introducing his personal key or the identification corresponding code, and other checking or control operations, such as information about later carried out operations, balances in credit accounts, electronic money or similar, as well as access to databases of different contents (phone list, electronic agenda, etc.). Also, both the state and result of the carried out operations or that will be carry out, and required information, or, in general, information relative to the operations that are carried out through the alphanumeric keyboard, can be visualised, for example in the visual screen (7), that could be, a multiple lines liquid glass screen.

In the preferred embodiment of the user interface integrated in a cellular phone terminal, all the mentioned elements (microprocessor, memories, keyboard, screen etc.), will be those of the telephone itself, so that their use would be shared between terminal and interface according to the use that is made in each moment of it.

This way, said permanent storage means (4) of user interface have addressable storage space for location of personal databases, adequate to store data relative to system itself, to user or another data type wanted to be integrated in said database.

Also, said user interface comprises protection means consisting in, preferably, permanent storage means, such as, preferably, a non volatile memory (5), for registration and storage of personal access keys, suitable to restrict the user interface utilisation at different levels, such as, preferably, global access, restricted access, or operation restricted to one user. This way, a group of security measures is established enabling a user the realisation of corresponding operations, that restricts the use of said interface at different levels, so avoiding unauthorised use by third people, because of loss or theft of user interface (1). Alternatively, said personal keys and their security and control associated procedures can be incorporated in one of the information carrying cards housed in the device, so they can be exchanged between different systems of multiple data intercommunication from information carrying cards, allowing the user to change said device when it is wished for reasons of obsolescence, failure, etc.

Included in this group of security and access restriction measures, it can be provided, optionally, an individual and exclusive identification number of the user interface (1), reason why this has means of storage of said individual and exclusive identification number or key. Alternatively, the individual and exclusive identification number could be stored in one of the information carrying cards housed in user interface.

System for multiple intercommunication is provided with a user interface with an emitter receiver by infrared rays, radio frequency signal, ultrasound, or any other appropriate technique to transmit data to a point of sale terminal of a commercial establishment System may be autonomous as a remote control device or to be associated to a cellular telephone connected to a mobile telephony network by the GSM system or another technology. To get access to the use of anyone of elements provided of memory carrying information, the user will dial in the mobile telephone keyboard the personal identification number (PIN), or to apply the print from his index finger to the window of a fingerprint reader incorporated to said mobile telephone. Commercial transaction is carried out without salesperson having physical contact with elements carrying user information, thus maintaining the confidentiality of said information. Point of sale terminal records the operation with a payment in salesperson's account and a simultaneous charge in user buyer's account. This is reflected in the cellular telephone screen data corresponding to such transaction such as previous and later balances to the operation, etc.

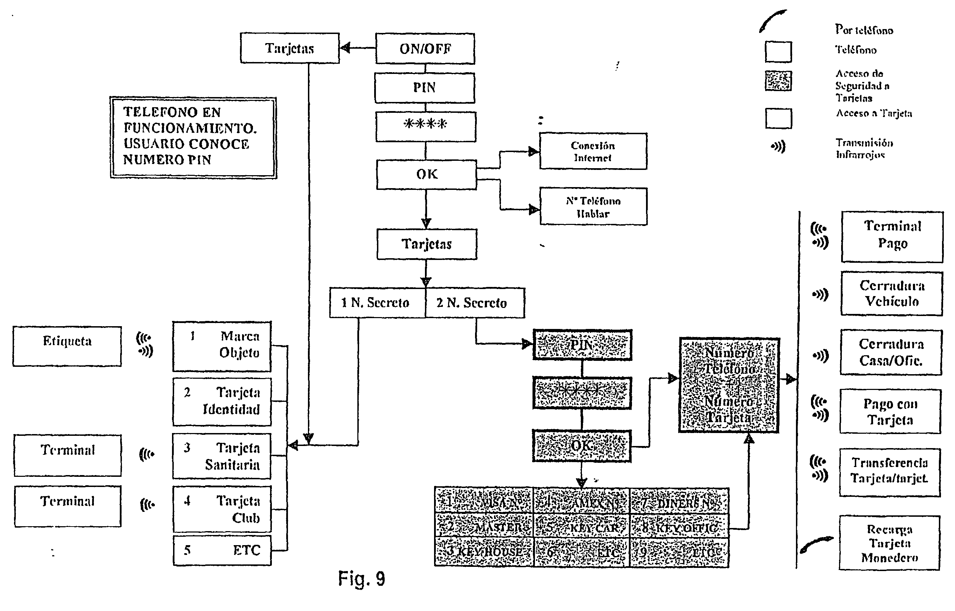

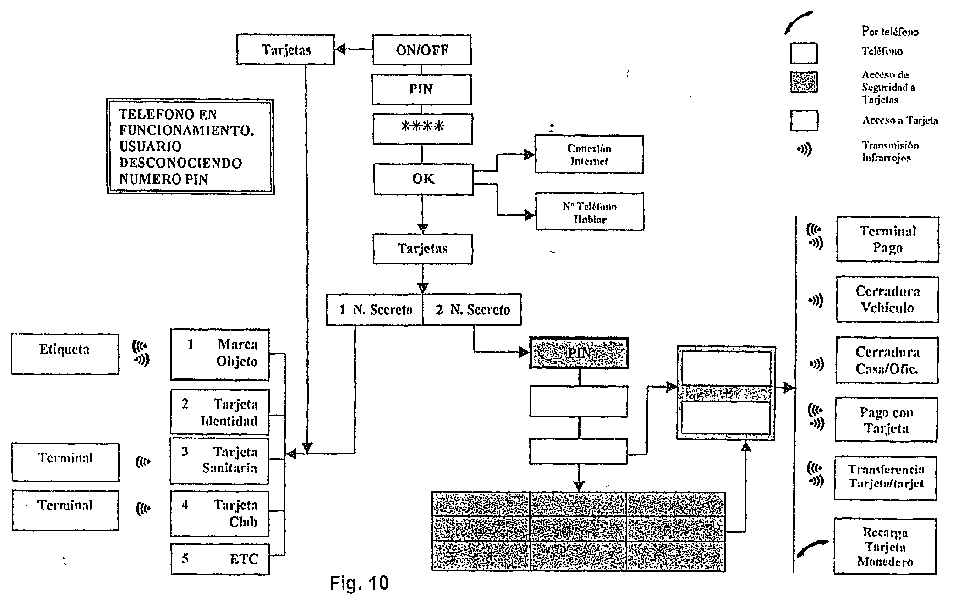

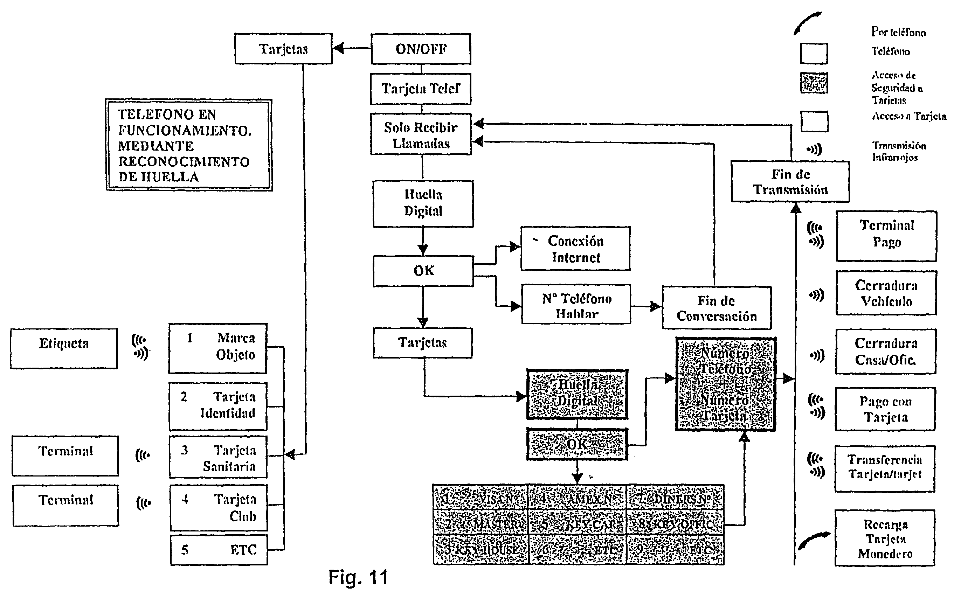

The security system is based, in this case, in the information exchange in a secure way by encryption methods, between two cards provided of memory carrying data, housed in user interface so that being mutually recognised the authorisation takes place for carrying out operations. In case of a cellular telephone the card which authorises to the other ones could be the User Identification Module (SIM) in the preferred embodiment. In Figures 9, 10 and 11 are illustrated by means of flow diagrams diverse situations in the use of user interface (1), when it is integrated in a cellular phone terminal, regarding the security system of the invention, where is appreciated the necessity of knowing the personal identification number (PIN) or to obtain a positive reading of the fingerprint, if this altemative feature is equipped

When the security system of the invention is applied to user interface integrated in a cellular phone terminal, it is based on the following: Each element provided with memory carrying information or similar, dedicated to the realisation of bank, commercial or similar transactions, it is usually issued by the corresponding issuing entity. When its use is required, the element provided of memory carrying information or similar will establish a secure exchange of information with the user identification module (SIM) of the phone terminal, in that way it will determine in reliable form that is active. To be able to establish this secure information exchange, the user will provide to issuing card entity and to the phone network operator, which has issued the user identification module (SIM), the necessary data, codes and keys. Such data, codes or keys would have been provided to the user previously by one part: the issuing entity or the operator, which has issued the SIM. These data will be incorporated either during the issue of the SIM or of the element provided with memory carrying information or similar, or they will be incorporated after the issue by the user itself or by some of the other parts.

When it has been verified that the user identification module (SIM) is present and active, the element provided of memory carrying information or similar may require the introduction of a specific code or personal identification number (PIN).

Also, the system for multiple intercommunication of data from information carrying cards provided with microprocessor and memory or similar, has an external device (9) for managing the commanded operations from said user interface (1), in order to, on one hand, communicate bidirectionally with said user interface (1), and, for other, to drive electromechanical and/or electronic elements (12) of device offering the corresponding service, such as cash dispenser, system for telephony collection, public cancelling system, or similar, that at the present time are provided of an appropriate card controller.

In order to allowing the establishment of a bi-directional communication between user interface (1) and said external device (9), for managing the operations commanded from said user interface (1), both elements of the system for multiple intercommunication of data from cards carrying information, provided with microprocessor and memory or similar, object of the present invention, have an emitter-receiver device (8, 10).

The emitter-receiver device (8, 10), provided in user interface (1), as well as in said external device (9), for managing commanded operations from said user interface (1), is, preferably, an emitter-receiver device by infrared rays, radio frequency, ultrasounds, or any other appropriate technique.

Finally, the system for multiple intercommunication of data form information carrying cards provided with microprocessor and memory or similar, object of the present invention, is provided with a group of elements suitable to communicate with other external devices. This way, the emitter-receiver device (8) equipped in user interface (1) enables the communication between it and a group of devices or information stations of prepared with this aim, equipped for its communication with the user interface itself (1).

Furthermore, the system for multiple intercommunication of data form information carrying cards provided with microprocessor and memory or similar, object of the present invention, it is adapted for remote communication with external devices. This way, user interface (1), when it is a remote control device, it is provided with a modem connection interface (13), suitable to allow remote connection and communication between said user interface (1) and a computer, (not displayed in Figures) thus allowing bi-directional data transfer between both devices, making possible to the user the control and supervision of the group of operations carried out, or to store them in a database, the computer managing of user interface, as well as configuration, test or similar operations of the user interface itself by means of the use of appropriate tools installed in the computer. This way, the user interface itself allows him to transfer data from it to a computer, which, with analysis and administration of databases available tools in the market, could, in a comfortable, quick and simple way, to analyse the group of carried out operations.

Being user interface integrated in a cellular phone terminal is unnecessary a modem connection, because the terminal itself, provided with means for its direct connection to a computer by cable, infrared rays or any other system, it is able to send and receive data using cellular networks, since these telephones communicate by means of digital techniques. Neither it is necessary the use of a computer in this case, since terminal can be provided with access capacity to networks for consultations of databases, configuration, test, carry out of bank operations etc., by means of terminal specific protocols, such as the Wireless Application Protocol, better known by its acronym WAP, or any other one that allows data transmission through cellular telephone networks that could exist in the future.

Connection means to a modem (13) and to a computer described above, also allow to use the system for multiple intercommunication of data from information carrying cards provided with microprocessor and memory or similar, object of the present invention, to carry out sale and purchase operations, access to databases, etc. through a computer and data networks, with local or world-wide extension, such as, preferably, Internet. Access to this type of local or world-wide networks allows the user access to both the information available in them and the use of services by them offered, using as payment means the user interface (1) itself.

The user interface (1) of the system for multiple intercommunication of data from information carrying cards provided with microprocessor and memory or similar, shown in the practical embodiment described, has a connection interface to an external reader (14), suitable to allow bi-directional communication between both of them, as well as access from said reader both to the information contained in said information and data carrying plates and in said internal storage means of the user interface itself. Test, verification and/or configuration operations can be carried out from said external reader over the user interface itself.

This connection interface (14), could be physically the same connection interface with modem (13) described previously, although in the present practical embodiment it is represented as two physically independent elements. Anyway, a corresponding controller will be provided for their use in each case.

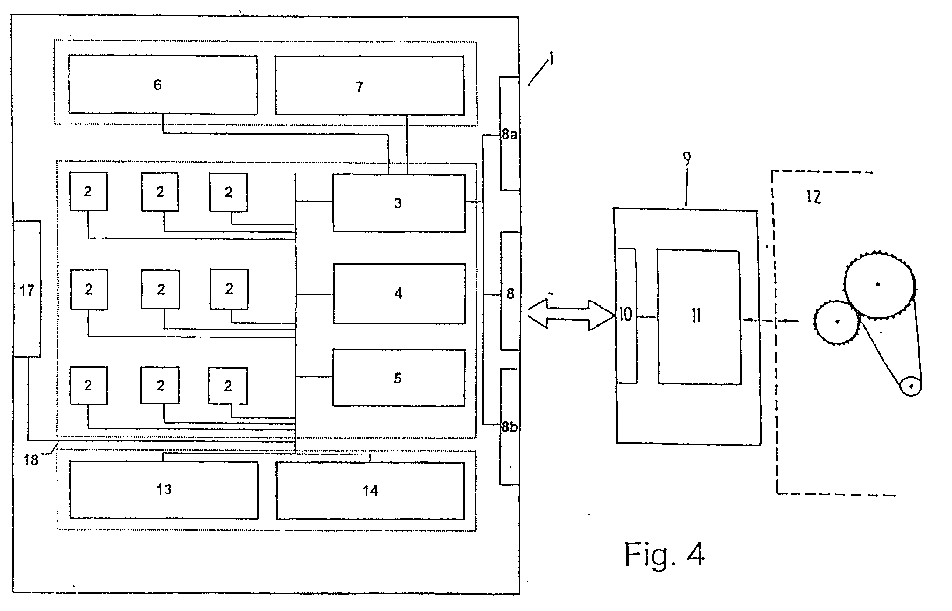

Referring now to Figures 4-7, it is represented in Figure 4, an altemative embodiment of the system for multiple intercommunication of data from information carrying cards provided with microprocessor and memory or similar, it consists of:
- an user interface (1), preferably consisting in either a remote control device, or integrated in a cellular phone terminal GSM, or of other technologies, having means of housing one or several plates (2) carrying information and data of said cards, a printed, flexible or other type circuit, suitable to make contact with said plates, shown in Figure as the electrical connection group,, in order to read information contained in said plates, a microprocessor (3), suitable for control, command and record of operations carried out from said user interface (1), means of information storage (4, 5) such as, preferably, a first read-write memory (4), suitable for data recording and reading, and a'second read only memory (5), preferably a non volatile memory, an alphanumeric keyboard (6), suitable to allow access to the information as well as for management of said plates (2), a visualisation screen (7), adequate for presenting the information related to operations being carried out, and an emitter-receiver device (8), suitable to establish communications with external devices that manage said operations, keeping in mind that in case of being integrated in a phone terminal, it would not be necessary to duplicate these elements, but rather their use would be shared between terminal and interface according to its use in each moment.
- User interface can also be equipped with a transmitter-receiver (8a), suitable for reading information recorded in identification chips, that are stimulated when they receive a radio signal in a certain band, emitting in turn the information in them recorded, encryption/decryption means (8b), for secure transmission of information and electronic signature support elements.
- an external device (9), for managing the operations commanded from said user interface (1), having an emitter-receiver device (10), suitable for establishing communications with user interface (1), and a driving module (11), suitable to command electromechanical and/or electronic devices (12), to execute operations commanded from said user interface (1).
- coupling means (17) for an external electronic chip or plate carrying information and data, suitable to carry out the reading of information contained in said external plate through said user interface (1), which comprises a printed, flexible or of another type circuit suitable to make contact with said plates, represented in Figure by the electric connection (18) with the main bus (19), adequate to communicate with the other elements of user interface (1).

The system for multiple intercommunication of data from cards carrying information provided with microprocessor and memory or similar, it is it adapted for remote communication with external devices. In this sense, user interface (1), when it is a remote control device, it has a connection interface to a modem (13), suitable to allow remote connection and communication between said user interface (1) and a computer (not shown in Figures), allowing bi-directional data transfer between both devices.

Being user interface integrated in a cellular phone terminal is unnecessary a modem connection, because the terminal itself, provided with means for its direct connection to a'computer by cable, infrared rays or any other system, it is able to send and receive data using cellular networks, since these telephones communicate by means of digital techniques. Neither it is necessary the use of a computer in this case, since terminal can be provided with access capacity to networks for consultations of databases, configuration, test, carry out of bank operations etc., by means of terminal specific protocols, such as the Wireless Application Protocol, better known by its acronym WAP, or any other one that allows data transmission through cellular telephone networks that could exist in the future.

User interface (1) of the system for multiple intercommunication of data from information carrying cards provided with microprocessor and memory or similar, has a connection interface to an external reader (14), suitable to allow bi-directional communication between both of them, as well as access from said reader both to the information contained in said information and data carrying plates and in said internal storage means of the user interface itself. Test, verification and/or configuration operations can be carried out from said external reader over the user interface itself.

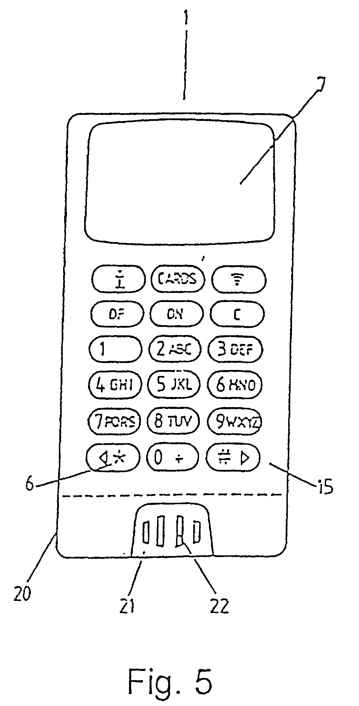

As it is represented in Figure 5, user interface (1) has a box (15) manufactured with a resistant, preferably slight material, such as plastic or any other one similar, of appropriate dimensions to be carried in a pocket, handbag or similar, being the preferred dimensions of said user interface (1) next to the dimensions represented in real scale in Figure 5. In a bottom extension of the box (15) there are arranged the coupling means (17), constituted in the present practical embodiment for a groove (20), that at the front face of the box (15) has an opening (21) appropriate to be coupled to an external electronic chip through the electric contacts (22) placed inside it.

Optionally, said opening may comprise non-movable protection means (not shown in Figures) such as a small tab or similar, in order to protecting appropriately from dirt and other external agents, the electric contacts (22) placed in said opening (21).

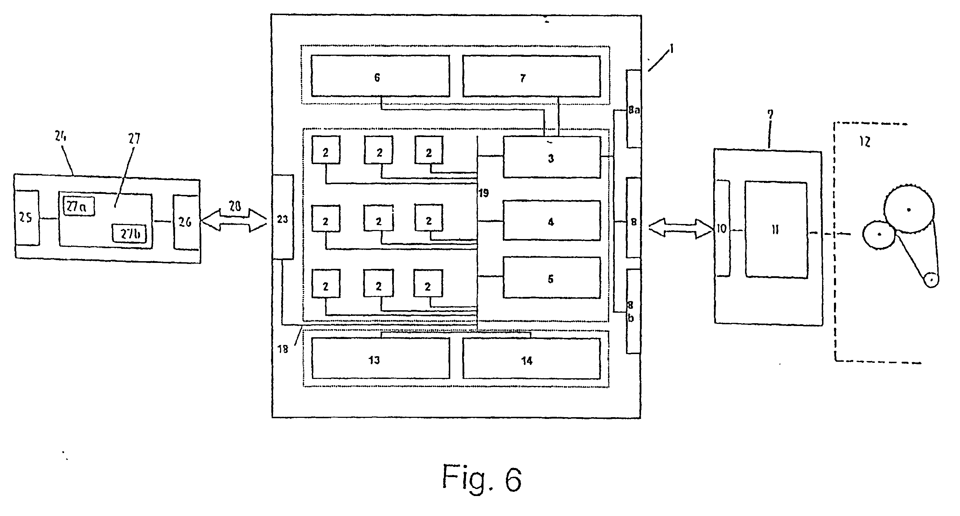

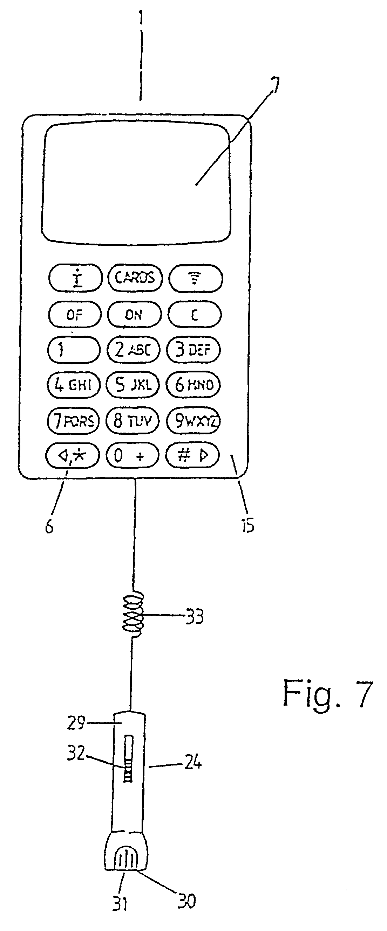

Figures 6 and 7 show another example of embodiment of the system for multiple intercommunication of data from information carrying cards provided of microprocessor and memory or similar, object of the present invention.

As it is shown in Figure 6, the coupling means consist in a communications port (23), suitable to be connected to an external reader means (24), having said communication port (23) of connection means to said printed, flexible or of another type circuit, incorporated in said user interface, represented in Figure 6 by means of the electric connection (18) with the main bus (19), suitable to communicate internally with the other elements of user interface (1).

Said external reader means (24), consists, preferably, on a reader device of the plates carrying information and data, embedded in a support element like a label or similar, having coupling means (25) suitable to be coupled to an external electronic chip through electric contacts arranged to this aim. Also, it has control, command and synchronisation means of communications with the user interface (1) by means of the corresponding communication protocol, communication means (26) with said user interface (1), as well as the necessary electronic circuitry (27) to transform the read information of the external electronic chip by the external reader means (24) in a signal (28) that is transmitted toward the communication port of (23) of user interface (1) by means of said corresponding communication means (26).

Optionally, the electronic circuitry (27) of the reader means (24) may have its own temporary storage means additionally (27a) as well as means of data validation (27b).

As it is shown in Figure 7, in the present practical embodiment, the external reader means (24) consists on a device contained in a box (29) with a substantially cylindrical or plane elongated form, having at its end coupling means (25), consisting, in the present practical embodiment, in an opening (30), preferably open by its middle plane, suitable to be coupled to an external electronic chip through the electric contacts (31) arranged to this aim. Also, the external reader means (24) has activation / deactivation reading means (32). Finally, said extemal reader means (24) has communication means (26) with said user interface (1), that in the present practical embodiment consists in an electric cable (33), that is connected by its other end (23) to the communication port of user interface (1). The electric cable (33) connection to user interface (1) is carried out by means of a suitable connector, preferably, not fastened in a permanent way to user interface.

Naturally, the communication among user interface (1) and the external reader means (24) may be established by of any conventional means of transmission, such as transmission by cable, transmission by radio or optic transmission. Correspondingly, both, the electronic circuitry (27) of the external reader means (24) and the communications port (23) of user interface (1), will have signal converter means as well as appropriate receiver/transmitter means

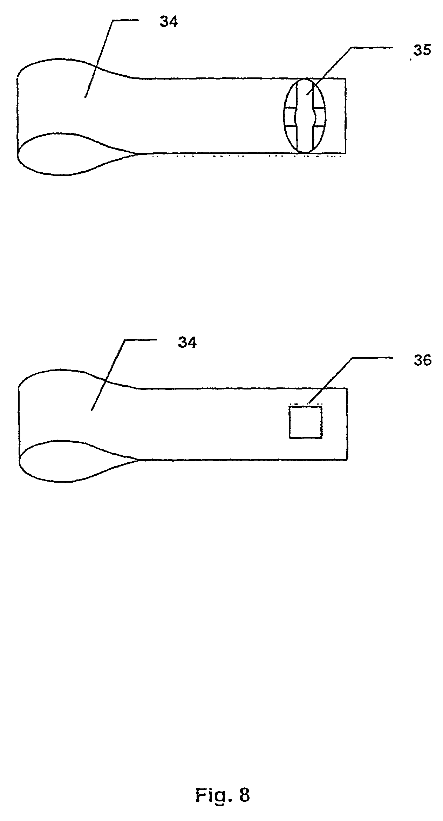

Referring now to Figure 8, it is emphasised that, advantageously, said carrying information and data external support (34) may take incorporated a microchip (35) of the type of those used in smart cards. This microchip should accomplish all the specifications of the norm ISO 7816 for chip cards, except in what is concerned to dimensions of physical support, i. e., instead of being embedded in a plastic card, it will go embedded in a different support (34), such as, for example, a band of flexible material or any rigid material making the label functions. Alternatively, said support (34) may take equipped an identification chip (36), that is stimulated when it receives a radio signal in a certain band, emitting in turn the information recorded in them, for identification effects.

The microchip (35), is a microprocessor with asynchronous or of another type communication, that will incorporate hardware and software security measures, so it becomes in an unique and non duplicable piece, so avoiding that can be copied. The operating system or the chip mask supports an encryption system that can make that the communication with the device of reading of the same one is completely secure and therefore it not only avoids fraud in the label (chip), but rather it also avoids it in the reader. Said algorithm will be in every moment that guarantees an appropriate level of security, accordingly with the state of the encryption technology, and that may be either of symmetrical key (for example, DES or triple DES) or of asymmetrical key (for example, RSA or elliptic curves). Altematively, said label may be equipped with an identification chip that remains passive under normal conditions, and it is stimulated when receives a radio signal of the appropriate frequency, emitting in turn the information in it recorded.

Now described the nature of the present invention sufficiently, as well as a way of taking it to the practice, only remain us to add that in its whole and parts that make up this one, it is possible to introduce changes of form, materials and arrangement, provided this alterations don't vary substantially the characteristics of the invention that are claimed following.

## Claims

1. System for multiple intercommunication of data from information carrying cards provided with microprocessor and memory or similar, of the type of those used for banking operations, buying operations, or for identification and other services, as for other operations of domestic kind, **characterised in that** it consist of:
- a user interface (1), preferably consisting of an autonomous remote control device, or one which is integrated in a cellular phone terminal of GSM or other technology, having housing means for one or several information and data carrying plates (2) of said cards, a printed circuit, flexible or of any other type suitable for making contact with said plates in order to read the information contained in said plates , a microprocessor (3) adequate for control, command and recording of the operations carried out from said user interface (1), information storage means (4,5) such as, preferably, a first read and write memory (4), adequate for storage and reading data, and a second read only memory(5), preferably, a non-volatile memory, an alphanumeric keyboard (6) suitable to allow access to the information as well as to the management of said plates (2), a visualisation screen (7), suitable for displaying the information relative to the operations that are carried out, and a emitter -receiver device (8), preferably, by infra-red rays, radio frequency signal, ultra-sounds, or any other suitable technique, able to establish communication with external devices that manage said operations, considering that in case of being integrated in a phone terminal, it is not needed to duplicate these elements, but it's use would rather be shared between the terminal and the interface, as a function of the actual use it is made thereof.
- Furthermore, the user interface can be equipped with a transmitter - receiver (8a), able for reading data recorded in the identification chips, that are stimulated when they receive a radio signal in a determinate band, thereby emitting the information recorded in them.
- The user interface can include, furthermore, encryption means that may consist of circuits (8b) dedicated to this function or it can be carried out by the microprocessor of the interface.
- Besides that, the user interface can integrate the electronic signature, whether supported by a card provided with microprocessor and memory, or stored in a non-volatile memory.
- An external device (9) for managing the operations commanded by said user interface (1), that is provided with an emitter - receiver device (10), suitable to establish communication with the user interface (1), and an driving module (11) adequate to command electromechanical and/or electronic devices (12) to execute the operations commanded by said user interface (1), and optionally,
- coupling means of an electronic chip or information and data carrier external plate able to perform the reading of the information contained in said external plate through said user interface (1), having contact means (22, 31) such as a printed, flexible or of any other type circuit, being able to make contact with said plates, as well as electronic connection means (18), with the main bus (19), capable to link said contact means (22, 31) with the other elements of the user interface (1).

2. System for multiple intercommunication of data from information carrying cards provided with microprocessor and memory or similar, according to the previous claim, **characterised in that** the emitter - receiver device (10) is an infrared rays, radio frequency signal, ultrasound or of any other suitable technique emitter - receiver device.

3. System for multiple intercommunication of data from information carrying cards provided with microprocessor and memory or similar, according to the previous claims, **characterised in that** said microprocessor (3) and memories (4, 5) contained in said user interface (1) are intended to perform functions of managing, classifying, identifying and storing of the information related to the operations performed according to criteria established in the programming of the microprocessor (3).

4. System for multiple intercommunication of data from information carrying cards provided with microprocessor and memory or similar, according to the previous claims, **characterised in that** the user interface (1) incorporates protection means preferably consisting of permanent storage media (5) such as preferably, a non volatile memory for recording and storage of personal access keys able to limit the use of the user interface at different levels, such as, preferably, global access, restricted access, or user limited operations. Alternatively, said personal keys and the security and control procedures associated to them can be incorporated in one of the information carrying cards housed in the user interface.

5. System for multiple intercommunication of data from information carrying cards provided with microprocessor and memory or similar, according to the previous claims, **characterised in that** the user interface (1) incorporates storage means of an identification number which is individual and exclusive to said user interface,

6. System for multiple intercommunication of data from information carrying cards provided with microprocessor and memory or similar, according to the previous claims, **characterised in that** the user interface (1) is provided with configuration and reconfiguration means of said user interface, as well as for adaptation, substitution, reposition or elimination of said data and information carrying plates (2).

7. System for multiple intercommunication of data from information carrying cards provided with microprocessor and memory or similar, according to the previous claims, **characterised in that** it has been adapted for remote communication with external devices.

8. System for multiple intercommunication of data from information carrying cards provided with microprocessor and memory or similar, according to the previous claims, **characterised in that** the user interface (1), when it is a remote control device, is provided with a connection interface to a modem (13), able to allow remote connection and communication between said user interface (1) and a computer, allowing bi-directional data transfer between both devices. In case of being the user interface integrated in a cellular phone terminal, the terminal itself is capable of sending and receiving data using the cellular networks.

9. System for multiple intercommunication of data from information carrying cards provided with microprocessor and memory or similar, according to the previous claims, **characterised in that** the user interface (1) is provided with a connection interface to an external reader (14) suitable to allow bi-directional communication between both, as well as the access from said reader, both to the information contained in said data and information carrying plates (2), as well as to said internal storage media (4, 5) of the user interface (1) itself.

10. System for multiple intercommunication of data from information carrying cards provided with microprocessor and memory or similar, according to the previous claims, **characterised in that** it is adapted for obtaining general, bank or similar information, relative to movements of bills, balances and any other operation as well as other available information in databases of operative centres, as well as for carrying out the payment and the reception of values with anyone of the available systems for realisation of said operations.

11. System for multiple intercommunication of data from information carrying cards provided with microprocessor and memory or similar, according to the previous claims, **characterised in that** the user interface (1) it is adapted to carry out sale and purchase operations, access to databases, etc. through a computer and networks, local or world-wide type, such as, preferably, Internet.

12. System for multiple intercommunication of data from information carrying cards provided with microprocessor and memory or similar, according to the previous claims, **characterised in that** the user interface (1) it is adapted to carry out operations of telephony collection through the available phone operative systems.

13. System for multiple intercommunication of data from information carrying cards provided with microprocessor and memory or similar, according to the previous claims, **characterised in that** the permanent storage means (4, 5) of user interface (1) have addressable storage space for the location of a personal database, suitable to store data relative to the system itself, to the user or another type of data that it is wanted to incorporate in this database.

14. System for multiple intercommunication of data from information carrying cards provided with microprocessor and memory or similar, according to the previous claims, **characterised in that** it comprises means of detection of error, alarms or similar states, suitable to detect anomalous situations due to the incorrect, inadequate, not authorised or similar use, as well as blocking means of one, several or all the manageable operations from user interface (1) as a result of the activation of said means of detection of error, alarms or similar states.

15. System for multiple intercommunication of data from information carrying cards provided with microprocessor and memory or similar, according to the previous claims, **characterised in that** the user interface (1) integrates their electronic elements in an single printed, flexible or of another type circuit, configurable, capable to integrate in said circuit the realisations of said information and data carrying plates carried.

16. System for multiple intercommunication of data from information carrying cards provided with microprocessor and memory or similar, according to the first claim, **characterised in that** said coupling means (17) are incorporated in the box structure itself (15) of user interface (1), consisting on a groove (20) that is provided by the superior face of said box (15) of an opening (21) suitable to be coupled to an external electronic chip through the electric contacts (22) prepared inside.

17. System for multiple intercommunication of data from information carrying cards provided with microprocessor and memory or similar, according to the claim 16, **characterised in that** said opening (21) has non-movable protection means such as a small tab or similar, appropriate to protect the electric contacts (22) from dirt and other external agents.

18. System for multiple intercommunication of data from information carrying cards provided with microprocessor and memory or similar, according to the claim 16, **characterised in that** said coupling means consist on a communication port (23) suitable to be connected a external reader means (24), capable to be coupled to a information and data carrying external plate embedded in a support element like a label or similar, having said external reader means (24) of coupling means (25) suitable to be coupled to said electronic chip or external plate through electric contacts (31), as well as control, command and synchronisation means of the communications with user's interface (1), by the corresponding communication protocol, of communication means (26) with said user interface (1), and of electronic circuitry (27) adequate to transform the read information of the external electronic chip by the external reader means (24) in a signal (28), that is transmitted toward the communication port (23) of user interface (1) by said corresponding communication means (26).

19. System for multiple intercommunication of data from information carrying cards provided with microprocessor and memory or similar, according to the claim 18, **characterised in that** the electronic circuitry (27) of the reader means (24) can have additionally temporary storage means (27a), as well as validation of data means (27b).

20. System for multiple intercommunication of data from information carrying cards provided with microprocessor and memory or similar, according to the claims 18 and 19, **characterised in that** said external reader means (24) consists on a device included in a box (29) with substantially cylindrical or plane elongated form, having at its end coupling means (25) consisting in an opening (30) preferably located in its middle plane, capable to be coupled to an external electronic chip through said electric contacts (31), having also activation / deactivation reading means (32).

21. System for multiple intercommunication of data from information carrying cards provided with microprocessor and memory or similar or the passive circuit being stimulated via radio, according to the previous claims, **characterised in that** the information and external data support may be placed in a physical element, such as vehicle, valuable object, luggage or similar for control and localisation purposes, by means of systems associated to networks of mobile telephony, thus allowing to locate a mobile telephone with certain precision or by means of the Global Positioning System (GPS), that allows to locate an equipment provided with this feature with great accuracy.

22. System for multiple intercommunication of data from information carrying cards provided with microprocessor and memory or similar **characterised in that** said information and data external support of may be placed in a label or element of commercial control with purposes of confirmation and authentication of marks and characteristic of commercial products, being able to carry out the transmission of information between the chip contained in said information and data external support and said reader means establishing a physical contact between them or without physical contact

23. Security system for its application to the system for multiple intercommunication of data from information carrying cards, **characterised in that** it is based on the use of a code or identification number own of the user, associated with the code own of an element provided with memory carrying information such as a credit card or similar.

24. Security system according to the claim 23, **characterised in that** said code or identification number own of the user coincides with the user personal identification number (PIN).

25. Security system according with the precedent claims 23 and 24, **characterised in that** to be able to access to the use of anyone of the elements provided with memory carrying information, such as credit cards or similar, it will be necessary to introduce the personal access number (PIN) corresponding to the user mobile telephone or the user fingerprint, thus avoiding unauthorised use of said elements.

26. Security system equipped with elements provided with memory carrying information, according to the claim 23, just as a credit card or similar, **characterised in that** said memory is configured so that it will be operative only in a combined way with the system for multiple intercommunication, having its same code or number of the user identification.

27. Security system equipped with the elements provided with memory carrying information, just as a credit card of similar, according to the claim 26, **characterised in that** the code or number of the user identification coincides with the code assigned by the cellular phone network operator the to this user and that it is memorised in the SIM.
